# EUROPÄISCHE PATENTSCHRIFT

(11) **EP 1 184 794 B1**
(45) Veröffentlichungstag und Bekanntmachung des Hinweises auf die Patenterteilung: **11.09.2002**
(21) Anmeldenummer: 00117655.1
(22) Anmeldetag: 16.08.2000
(51) Int. Cl.: G06F 17/30, H04N 7/24

(54) **Verfahren und Vorrichtung zur Erstellung aktivierbarer Objekte für Elemente einer Videosequenz**
Method and apparatus for creating activatable objects for elements of a video sequence
Méthode et appareil de création d'éléments activable d'une séquence vidéo

(43) Veröffentlichungstag der Anmeldung: 06.03.2002
(73) Patentinhaber: active-film.com AG, 60487 Frankfurt am Main (DE)
(72) Erfinder: Hampl, Tilman, 97297 Waldbüttelbrunn (DE); Piegsda, Winfried, 76344 Eggenstein-Leopoldshafen (DE); Sonntag, Ralph, Dr., 36093 Künzell (DE)
(74) Vertreter: Grünecker, Kinkeldey, Stockmair & Schwanhäusser Anwaltssozietät

(56) Entgegenhaltungen:
- EP-A- 0 596 823
- WO-A-99/52045
- US-A- 5 969 715

## Beschreibung

Die Erfindung betrifft ein Verfahren und eine Vorrichtung zur rechnergestützten Erstellung aktivierbarer Objekte für Elemente einer Videosequenz gemäß dem Oberbegriff des Anspruchs 1.

Durch das wirtschaftliche Interesse von Marketing und Vertrieb einen Kunden auf einfache und attraktive Weise an Produkte oder Informationen heranzuführen, durch die steigende Verbreitung verschiedenster Wiedergabeplattformen für Videosequenzen und auch durch die Möglichkeiten, über das Internet Videosequenzen zu beziehen wird Interaktivität in Videosequenzen zu einem wichtigen Faktor für die Bearbeitung von Videosequenzen.

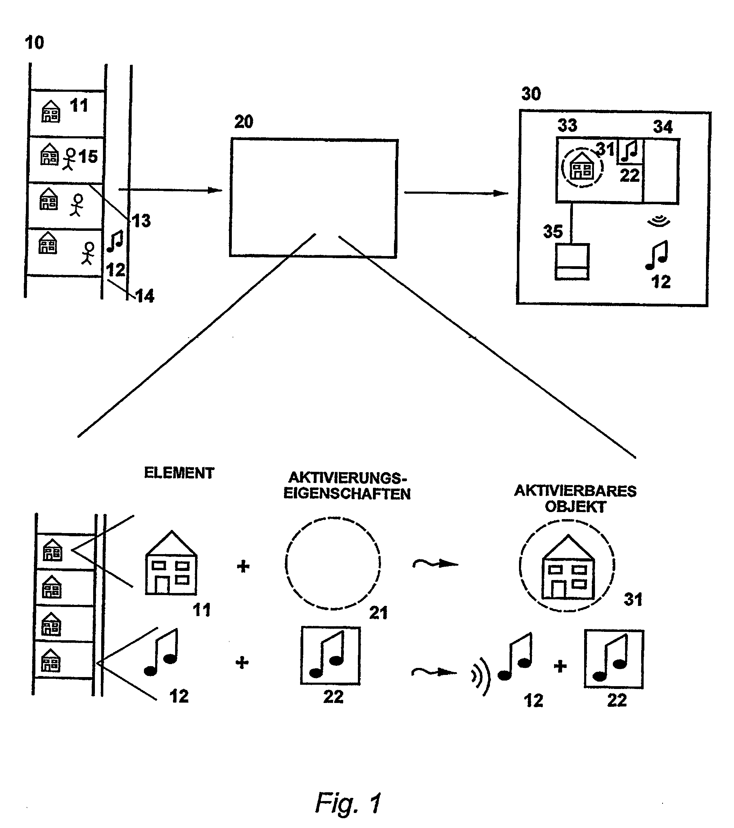

Figur 1 zeigt ein grundlegendes Schema einer Erstellung von Interaktivität für Elemente 11, 12 oder 15 einer Videosequenz 10. Die Videosequenz 10 umfasst, hier beispielhaft gezeigt, eine Bildsequenz 13 und eine Tonspur 14. In einer Einrichtung 20 zur Erstellung der Interaktivität werden für die Elemente 11 und 12 Aktivierungseigenschaften 21 und 22 festgelegt und aktivierbare Objekte 31 und (12+22) erstellt. Die aktivierbaren Objekte 31, (12+22) werden in die Videosequenz 10 eingebunden, um in einer Wiedergabeplattform 30 Interaktivität bereitzustellen. In der Wiedergabeplattform 30 wird die Bildsequenz 13 in einer Bildschirmeinheit 33 mit dem aktivierbaren Objekt 31 und der aktivierbaren Fläche 22 dargestellt und die Tonspur 14 durch eine Tonwiedergabeeinheit 34 als Tonfolge 12 wiedergegeben. Ein Betrachter (nicht dargestellt) hat durch Aktionen mit einer Zeigereinheit 35 die Möglichkeit, die aktivierbaren Objekte 31 oder (12+22) zu aktivieren. Die Aktivierungseigenschaften 21, 22 können verschiedene Ereignisse, im folgenden auch als inhaltliche Aktivierbarkeit bezeichnet, für unterschiedliche Aktionen des Betrachters enthalten. Zeigt der Betrachter mittels der Zeigereinheit 35 auf das aktivierbare Objekt 31 kann ein informativer Text zu dem Element 11 angezeigt werden. Drückt der Betrachter beim Zeigen eine Taste auf der Zeigereinheit 35, so kann eine kurze Videosequenz (nicht dargestellt) mit weiteren aktivierbaren Objekten dargestellt werden, nach dessen Ende mit der Videosequenz 10 fortgefahren werden kann.

Die Elemente einer Videosequenz können, wie in Figur 1, visuell (Haus 11) oder auditiv (Tonfolge 12), aber auch inhaltsbezogen (beispielsweise Freude oder Freundschaft) sein. Die herkömmlichen Verfahren zur Erstellung von Interaktivität für Elemente einer Videosequenz sind auf visuelle Elemente ausgerichtet.

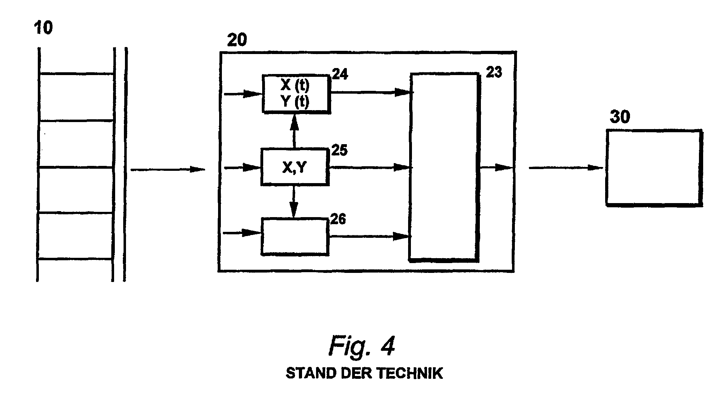

In Figur 4 ist ein Verfahren zur Verwaltung von Interaktivität von Elementen einer Videosequenz gemäß dem Stand der Technik dargestellt. In der Erstellungseinrichtung 20 wird für ein Element der Videosequenz 10, das aktivierbar sein soll, die räumliche Anordnung des Elements in einer Einheit 25 zur Koordinatenerfassung bestimmt und die räumliche Anordnung des Elements in seiner zeitlichen Entwicklung in einer Einheit 24 zur Bewegungserfassung verfolgt. In einer Einheit 26 zur Bestimmung der Aktivierungseigenschaften werden Aktivierungseigenschaften für das Element festgelegt. Zusammen mit den räumlichen Informationen aus den Einheiten 24 und 26 werden die Aktivierungseigenschaften in einer Einbindungseinheit 23 in die Videosequenz 10 eingearbeitet. Abhängig von Erfordernissen für eine Wiedergabeplattform 30 wird die Videosequenz 10 mit dem eingebundenen aktivierbaren Objekt 31 oder getrennt von ihm an die Wiedergabeplattform 30 weitergegeben.

Um die Bewegung eines Elements zu erfassen, sind im Stand der Technik verschiedene Methoden bekannt, die alle mit größeren Nachteilen verbunden sind. Bei einer manuellen Bearbeitung müssen dem Element seine Aktivierungseigenschaften Bild für Bild zugewiesen werden. Diese manuelle Bearbeitung bedingt einen extrem großen Aufwand mit vielen Fehlermöglichkeiten. Bei einer halbautomatischen Bearbeitung wird das aktivierbare Objekt nur in einer Auswahl von Hauptbildem der Videosequenz erzeugt. Dann kann die Bewegung des Elements zwischen den Hauptbildem automatisch berechnet werden, solange es sich auf mathematisch einfach definierbaren Kurven bewegt. Bei erhöhtem Rechenaufwand verringert sich damit die notwendige manuelle Bearbeitung. Ausgehend von einer Grundform des Elements kann eine Mustererkennung das Element Bild für Bild automatisch erfassen und somit die Bewegung des Elements in der Videosequenz verfolgen. Die Mustererkennung wird insbesondere dadurch erschwert, dass das Element im Laufe der Videosequenz in seiner Darstellung veränderlich ist. Selbst für einfache Videosequenzen ergibt sich somit ein hoher Rechenaufwand. Eine Mustererkennung beispielsweise für eine bestimmte Person, für die sich der gezeigte Ausschnitt, die Perspektive oder die Haltung verändert, wäre extrem aufwendig.

**Tabelle 1:**

| Ein Beispiel für räumliche Informationen von Elementen einer Videosequenz | | | | | | | | |
|---|---|---|---|---|---|---|---|---|
| **Element** | **X**_{**s**} | **Y**_{**s**} | **Bild** | | | | | |
| | | | **0** | **1** | **2** | **3** | **...** | **Ende** |
| **1** | X₁(0) | Y₁(0) | X₁(0) Y₁(0) | X₁(0) Y₁(0) | X₁(0) Y₁(0) | X₁(0) Y₁(0) | ... | X₁(0) Y₁(0) |
| **2** | X₂(2) | Y₂(2) | - | - | X₂(2) Y₂(2) | X₂(2) Y₂(2) | ... | - |
| **3** | X₃(1) | Y₃(1) | - | X₃(1) Y₃(1) | X₃(2) Y₃(2) | X₃(3) Y₃(3) | ... | - |
| **4** | X₄(0) | Y₄(0) | X₄(0) Y₄(0) | ... | ... | X₁(0) Y₁(0) | ... | - |
| **5** | X₅(3) | Y₅(3) | - | - | - | X₁(0) Y₁(0) | ... | - |
| **6** | - | - | - | + | + | + | ... | - |

In der Tabelle 1 sind erfasste räumliche Informationen zu 6 Elementen beispielhaft dargestellt. In der ersten Spalte steht die Nummer des Elements, in den nächsten beiden Spalten folgen die Koordinaten des Elements beim ersten Auftreten desselben in der Videosequenz, danach folgen die Koordinaten des Elements in der zeitlichen Entwicklung, Bild für Bild dargestellt. Ist ein Element zu einem Zeitpunkt nicht vorhanden, so ist die entsprechende Zelle mit "-" gefüllt.

Element 1 ist als einziges Element über die gesamte Videosequenz zu sehen und bewegt sich nicht (X₁(Bild)=X₁(0); Y₁(Bild)=Y₁(0)). Element 2 ist erst ab Bild 2 in der Sequenz zu sehen, bewegt sich aber auch nicht. Element 3 bewegt sich ab Bild 1 sehr schnell in der Videosequenz und ist auch nur kurz in der Videosequenz zu sehen. Element 4 dagegen bewegt sich langsam von X₄(O)/Y₄(O) zu Element 1. Element 5 ist ein inhaltsbezogenes Element, das existiert solange Element 4 bei Element 1 ist, ihm werden die Koordinaten von Element 1 zugewiesen. Element 6 ist auditiver Natur und besitzt somit keine Koordinaten. In Tabelle 1 ist, solange Element 6 vorhanden ist, ein "+" in Tabelle 1 beispielhaft eingetragen.

Ein weiteres Problem entsteht, wenn ein Element, das aktiviert werden soll, zu kurz in der Videosequenz zu sehen ist oder die Bewegung des Elements zu schnell ist, um von einem Betrachter erkannt und aktiviert zu werden. Abhängig von dem Betrachter und der Wiedergabeplattform kann eine maximal sinnvolle Geschwindigkeit oder eine minimal sinnvolle Sichtbarkeitsdauer für ein Element, das aktivierbar sein soll, sehr unterschiedlich sein. Wiedergabeplattformen können sich beispielsweise unterscheiden durch Bildschirmgröße, Bildauflösung, Wiedergabegeschwindigkeit, Aktivierungsmöglichkeit, Betriebssystem, Computerprogramm zur Wiedergabe der Videosequenz oder verschiedene Softwarestände des Computerprogramms.

Nimmt man für das Beispiel der Elemente aus Tabelle 1 eine minimale sinnvolle Sichtbarkeitsdauer von 4 Bildern an, so sind die Elemente 2, 3 und 5 zu kurz sichtbar, um von dem Betrachter aktiviert zu werden. Zusätzlich kann man annehmen, dass das Element 3 zu schnell bewegt ist, um für den Betrachter aktivierbar zu sein.

Aufgrund der möglichen Unterschiede zwischen Wiedergabeplattformen sollte eine Videosequenz an das spezielle Format für die Wiedergabeplattform angepasst sein. Eine vorhandene Videosequenz mit aktivierbaren Objekten kann nur begrenzt für verschiedene Wiedergabeplattformen konvertiert werden. Dagegen bedingt eine formatspezifische Erstellung von Versionen der Videosequenz für verschiedene Wiedergabeplattformen bei einem Verfahren gemäß dem Stand der Technik (Figur 4) meist die Wiederholung arbeitintensiver Schritte im Verfahren.

WO-A1-99/52045 betrifft ein Editier- und Liefersystem, welches ein Videosignal und zugehörige interaktive Elemente synchronisiert zueinander zu einer Darstellungseinheit überträgt. Zu dem Videosignal in einer Videospur werden die interaktiven Elemente in einer interaktiven Spur angeordnet. Für ein Bereitstellen eines interaktiven Videosignals wird neben der synchronisierten Übertragung des Videosignals und der interaktiven Elemente auch ein Speichern des interaktiven Videosignals unterstützt.

US-A-5 969 715 behandelt die Verwendung unterschiedlicher Wiedergabeplattformen in interaktiven Informationssystemen. Es wird ein interaktiver Informationsstrom bereit gestellt, der unabhängig von Wiedergabeplattformen ist. In der Wiedergabeplattform wird dann die Wiedergabe des interaktiven Informationsstroms an die Eigenschaften der Wiedergabeplattform angepasst.

Es ist die Aufgabe der Erfindung, ein vereinfachtes Verfahren zum Bereitstellen eines aktivierbaren Objekts für ein Element einer Videosequenz anzubieten, wobei das Verfahren insbesondere verschiedene Wiedergabeplattformen mit unterschiedlichen Formaten berücksichtigen soll.

Diese Aufgabe wird erfindungsgemäß durch ein Verfahren gemäß Anspruch 1 gelöst. Die Unteransprüche beschreiben bevorzugte Ausführungsformen der Erfindung.

Gemäß der Erfindung wird die zeitliche Aktivierbarkeit für ein Element erfasst und ein aktivierbares Objekt für eine Wiedergabeplattform, mit einem spezifischen Format für Videosequenzen, erstellt, wobei das formatspezifische Erstellen mittels der zeitlichen Aktivierbarkeit sowie Vorgaben für Aktivierungseigenschaften erfolgt, die in einer Datenbank gespeichert sind, ein räumliches Anordnen des aktivierbaren Objekts anhand der Vorgaben erfolgt, das Erstellen angepasst an ein plattform-spezifisches Format der Wiedergabeplattformen erfolgt, wobei die Vorgaben plattform-formatspezifisches Vorgaben enthalten. Die formatspezifischen Vorgaben berücksichtigen die Eigenschaften der Wiedergabeplattform für Videosequenzen mit aktivierbaren Objekten. Für ein Element kann somit plattform-spezifisch ein aktivierbares Objekt erstellt werden. Dabei muss die räumliche Anordnung des Elements oder die Bewegung des Elements nicht erfasst werden. Die Videosequenz muss nur einmal für das Erfassen der zeitlichen Aktivierbarkeit für das Element bearbeitet werden, bevor ein aktivierbares Objekt erstellt werden kann, wenn für das Element die Aktivierungseigenschaften bereits bekannt sind.

Vorzugsweise wird für das Erstellen vorgegeben, einen selektierbaren Text oder eine aktivierbare Fläche als Repräsentant des Elements, räumlich unabhängig von dem Element angeordnet, zu verwenden. Es entfällt die Notwendigkeit für eine Erfassung oder Festlegung eines Repräsentanten für das Element. Dadurch wird eine vereinfachte Erstellung einer Videosequenz mit aktivierbaren Objekten ermöglicht.

Gemäß einer bevorzugten Ausgestaltung des Verfahrens werden die zeitliche Aktivierbarkeit und Aktivierungseigenschaften für das Element getrennt von der Videosequenz verwaltet, wodurch die Erstellung für verschiedene Wiedergabeplattformen besser unterstützt wird.

Gemäß einer weiteren bevorzugten Ausgestaltung des Verfahrens werden die Aktivierungseigenschaften und die zeitliche Aktivierbarkeit in einer externen Datenbank und getrennt voneinander abgelegt, sind aber durch Verweise einander zugeordnet. Die Aktivierungseigenschaften und die zeitliche Aktivierbarkeit in der externen Datenbank lassen sich leicht und übersichtlich als Liste darstellen und einfach ändern.

Besonders zweckmäßig ist es, wenn die Vorgaben für Aktivierungseigenschaften allgemeine Vorgaben enthalten, die in einer externen Datenbank abgelegt sein können. Die allgemeinen Vorgaben ermöglichen die Wiederverwendung von Aktivierungseigenschaften für ein Element in anderen Videosequenzen, wenn beispielsweise das Element in mehreren Videosequenzen existiert, oder grundsätzliche Aktivierungseigenschaften eines Elements weiterverwendet werden können.

Gemäß einer bevorzugten Ausgestaltung des Verfahrens erfolgt das Erfassen der zeitlichen Aktivierbarkeit für ein Element durch das Setzen von Zeitmarken in Antwort auf eine Aktion eines Bearbeiters bei einer Wiedergabe der Videosequenz. Dadurch ist das Erfassen der zeitlichen Aktivierbarkeit effizient gelöst.

Bei einer zusätzlichen Verfahrensausgestaltung wird das Erstellen der aktivierbaren Objekte unter Verwendung eines Exportfilters realisiert, der auf eine Anfrage durch das formatspezifische Erstellen automatische reagiert. Wenn ausreichend Vorgaben und Aktivierungseigenschaften für eine einmal erzeugte Videosequenz vorliegen, ermöglicht der Exportfilter die Erstellung beliebig vieler Versionen der Videosequenz für unterschiedliche Wiedergabeplattformen, nur durch Angabe des spezifischen Formats der Wiedergabeplattform.

Vorzugsweise können Gewichtungen für die Vorgaben und die Aktivierungseigenschaften vorhanden sein. Aus widersprüchlichen Vorgaben für Aktivierungseigenschaften und Aktivierungseigenschaften kann somit anhand der Gewichtungen eine Aktivierungseigenschaft ausgewählt werden. Durch die Gewichtung der Vorgaben und der Aktivierungseigenschaften können relative Vorgaben realisiert werden, die für Sonderfälle flexibel bleiben.

Gemäß einer bevorzugten Ausgestaltung wird zur Realisierung eines der beschriebenen Verfahren eine rechnergesteuerte Vorrichtung verwendet, wodurch kurze Bearbeitungszeiten und eine optimierte Ausgestaltung des Verfahrens ermöglicht werden.

Gemäß einer weiteren bevorzugten Ausgestaltung enthält ein Speichermedium ein Computerprogramm oder eine Befehlssequenz, die eines der beschriebenen Verfahren realisieren. Durch diese Ausgestaltung wird ein einmal implementiertes Verfahren mehrfach verwendbar und transportabel.

Die angefügten Zeichnungen zeigen:
- Figur 1: ein grundlegendes Schema für die Erstellung von Interaktivität von Elementen einer Videosequenz,
- Figur 2: eine Darstellung eines erfindungsgemäßen Verfahrens für die Erstellung aktivierbarer Objekte in einer bevorzugten Ausführungsform,
- Figur 3: eine weitere Darstellung des erfindungsgemäßen Verfahrens für die Erstellung aktivierbarer Objekte in der bevorzugten Ausführungsform, wobei die Aktivierungseigenschaften der Elemente bereits bekannt sind.
- Figur 4: eine Darstellung eines Verfahrens zur Verwaltung von Interaktivität von Elementen einer Videosequenz gemäß dem Stand der Technik.

Die Erfindung wird im folgenden unter Bezug auf die angefügten Zeichnungen anhand bevorzugter Ausführungsformen beschrieben.

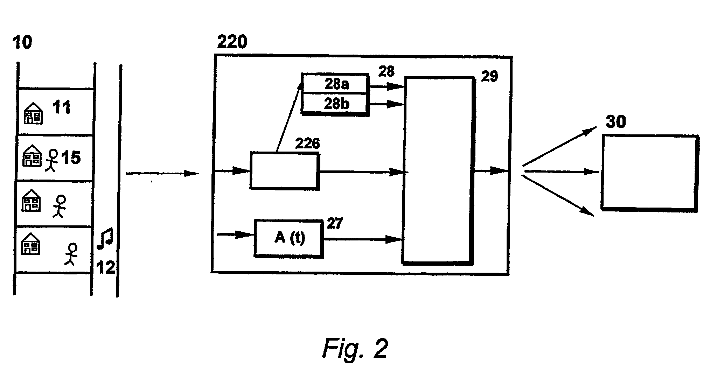

Eine bevorzugte Ausführungsform der Erfindung ist in Fig. 2 dargestellt. Für die Videosequenz 10 mit den Elementen 11, 12 und 15 wird in der Erstellungseinrichtung 220 Interaktivität formatspezifisch für eine Wiedergabeplattform 30 bereitgestellt, die ein spezifisches Format für die Wiedergabe der Videosequenz 10 mit einem aktivierbaren Objekt verwendet.

Die Wiedergabeplattform 30 kann beispielsweise ein Computer, ein Mobiltelefon, ein Femseher mit entsprechenden Eigenschaften oder ein Fernseher im Zusammenhang mit einem Videorecorder sein. Die Erstellungseinrichtung 220 kann insbesondere Teil eines Computers, einer Video-Bearbeitungsschnittstelle oder Filmbearbeitungseinrichtung sein; die vorhandene Einrichtung bestimmt wesentlich die Ausführung des Verfahrens. Ein Computer kann insbesondere folgendes umfassen: eine Anzeigeeinheit, eine Tastatur, eine Maus als Zeigereinheit, eine Steuereinheit, eine Festplatte und ein Laufwerk für optische oder magnetische Speichermedien. Femer kann der Computer sinnvoller insbesondere durch folgende Einrichtungen ergänzt sein: ein Modem, ein Mikrofon, Lautsprecher und eine digitale Kamera. Im folgenden wird insbesondere von einem Computer mit den genannten Ergänzungen als Erstellungseinrichtung 220 ausgegangen. Eine Videosequenz kann insbesondere durch digitalisieren einer Bild- und Tonsequenz und einer darauf folgenden Komprimierung entstehen.

In der Erstellungseinrichtung 220 wird eine zeitliche Aktivierbarkeit für ein Element 11, 12 oder 15 in der Aktivierbarkeitseinheit 27 erfasst. Ein aktivierbares Objekt für eines der Elemente 11, 12 oder 15 wird in der Einbindungseinheit 29 formatspezifisch für die Wiedergabeplattform 30 erstellt. Erfindungsgemäß erfolgt das formatspezifische Erstellen mittels der zeitlichen Aktivierbarkeit, sowie den Vorgaben aus der Vorgabeneinheit 28, wobei das formatspezifische Erstellen für verschiedene Wiedergabeplattformen unterstützt wird und die räumliche Anordnung des aktivierbaren Objekts anhand der Vorgaben erfolgt Die formatspezifischen Vorgaben 28b aus der Vorgabeneinheit 28 ermöglichen ein formatspezifisches Erstellen für unterschiedliche Wiedergabeplattformen. Sind Aktivierungseigenschaften und die zeitliche Aktivierbarkeit für das Element 11, 12 oder 15 vorhanden oder bereits gespeichert, so kann in der Einbindungseinheit 29 die räumliche Anordnung eines aktivierbaren Objekts beispielsweise anhand der Vorgabe erfolgen:
- aktivierbare Objekte in einem getrennt dargestellten Bereich außerhalb der Videosequenz 10 nebeneinander anzuordnen oder
- maximal 4 aktivierbare Objekte "oben", "unten", "rechts" und "links" in der Videosequenz anzuordnen, wenn die Wiedergabeplattform 30 beispielsweise genau 4 entsprechende Richtungstasten zur Aktivierung von aktivierbaren Objekten anbietet.
Lautet eine weitere Vorgabe eine aktivierbare Fläche mit einem Namen des Elements als Repräsentant für das Element 11, 12 oder 15 zu verwenden, so sind alle Randbedingungen für das Erstellen vorhanden. Als vorgegebener Repräsentant für das Element 11, 12 oder 15 ist auch ein Text, beispielsweise der Name des Elements, denkbar, der in der Wiedergabeplattform 30 selektiert werden kann.

Die zeitliche Aktivierbarkeit kann beispielsweise durch Zeitmarken für Start und Ende eines Aktivierbarkeitszeitraumes, wie in Tabelle 2 dargestellt für die Elemente des Beispiels aus Tabelle 1, erfasst oder gespeichert werden. Die Zeitmarken können bevorzugt gesetzt werden in Antwort auf eine Aktion eines Bearbeiters einer Videosequenz (nicht dargestellt) bei Wiedergabe der Videosequenz. Beispielsweise kann der Bearbeiter die Zeitmarken von Element 1 durch Drücken einer dem Element 1 zugeordneten Schaltfläche setzen, während die Videosequenz, insbesondere in Echtzeit, wiedergeben wird. Es ist sinnvoll die zeitliche Aktivierbarkeit getrennt von der Videosequenz in einer externen Datenbank abzulegen, da die zeitliche Aktivierbarkeit somit leichter änderbar und verwaltbar bleibt.

**Tabelle 2:**

| Eine zeitliche Aktivierbarkeit für das Beispiel aus Tabelle 1. | | |
|---|---|---|
| **Element** | **t**_{**start**} | **t**_{**ende**} |
| **1** | Bild₀ | Bild_{Ende} |
| **3** | Bild₁ | Bild₅ |
| **4** | Bild₀ | Bild₄ |
| **5** | Bild₃ | Bild₆ |
| **6** | Bild₁ | Bild₄ |

In Tabelle 2 ist das Beispiel für eine zeitliche Aktivierbarkeit von Elementen einer Videosequenz dargestellt, das sich an dem Beispiel in der Tabelle 1 orientiert. Für jedes aktivierbare Element ist ein Startzeitpunkt (tₛₜₐᵣₜ) und ein Endzeitpunkt (t_{ende}) für die Aktivierbarkeit des Elements angegeben. Im Vergleich zu Tabelle 1 ist zu erkennen, dass das potentiell aktivierbare Element 2 nicht aktivierbar sein soll. In Reaktion auf die für eine Aktivierung zu kurze Sichtbarkeit der Elemente 2, 3, und 5 (siehe Beschreibung zu Tabelle 1) wird der Aktivierbarkeitszeitraum für die Elemente 3 und 5 auf einen minimal sinnvollen Aktivierbarkeitszeitraum von 4 Bildern gesetzt. Die Aktivierbarkeit ist also unabhängig von der zeitgleichen Wiedergabe, beispielsweise Sichtbarkeit, des Elements. Es sind auch mehrere voneinander getrennte Aktivierbarkeitszeiträume für ein Element denkbar.

In den allgemeinen Vorgaben 28a aus Figur 2 können einmal für das Element 11, 12 oder 15 in einer Einheit 226 zur Bestimmung der Aktivierungseigenschaften festgelegte Aktivierungseigenschafen für das Element 11, 12 oder 15 gespeichert werden, um für andere Videosequenzen (nicht dargestellt), die das gleiche Element 11, 12 oder 15 enthalten wiederverwendbar zu sein. Wird beispielsweise für das Element 11, einem Musikgeschäft, eine Vielzahl von Videosequenzen mit aktivierbaren Objekten versehen, so können die Aktivierungseigenschaften der Elemente, die mehrmals in den Videosequenzen auftauchen, wieder verwendet werden. Weiterhin können beispielsweise Standardprodukte des Musikgeschäfts 11, die in der Videosequenz 10 nicht vorkommen, aber trotzdem angeboten werden sollen, aus den allgemeinen Vorgaben 28a als aktivierbare Objekte für die Videosequenz 10 erstellt werden.

Die Aktivierungseigenschafen für das Element 11, 12 oder 15 der Videosequenz 10 werden getrennt von der Videosequenz 10 in einer externen Datenbank verwaltet. Sie können neben einer inhaltlichen Aktivierbarkeit für das Element 11, 12 oder 15 auch Informationen beispielsweise über einen Repräsentanten für das Element 11, 12 oder 15 oder über die räumlich Anordnung des Elements 11, 12 oder 15 enthalten. Im Vergleich des erfindungsgemäßen Verfahrens mit dem Stand der Technik kann festgestellt werden, dass die räumlich Anordnung optional erfasst werden kann und somit im Beispiel aus Tabelle 1 nur das Element 4 in seiner räumlichen Anordnung optional erfasst werden würde, da es sich ausreichend langsam bewegt, um aktiviert werden zu können. Aktivierungseigenschaften und zeitliche Aktivierbarkeit können insbesondere in der gleichen externen Datenbank getrennt voneinander abgelegt, aber beispielsweise über die Elementnummem miteinander verknüpft sein.

Die Vorgabeneinheit 28 kann eine lokale Kopie einer externen Datenbank sein, oder eine Auswahl von Daten aus der externen Datenbank beinhalten.

Abhängig von der Wiedergabeplattform 30 wird das aktivierbare Objekt in die Videosequenz 10 eingebunden und getrennt von oder eingebunden in die Videosequenz 10 an die Wiedergabeplattform 30 weitergeleitet.

Die Wiedergabeplattform 30 kann die Videosequenz 10 mit ihren aktivierbaren Objekten auf drei Wegen erhalten:
- auf einem Speichermedium von einem Anbieter,
- von einem Speichermedium des Anbieters, übertragen über eine Verbindung zwischen einer Wiedergabeplattform und dem Anbieter oder
- mittels spezieller Techniken, beispielsweise Internet-Protokolle, als jeweils nur aktueller Ausschnitt der Videosequenz 10, ohne dass eine lokale Kopie der Videosequenz 10 bei der Wiedergabeplattform 30 angelegt werden muss.

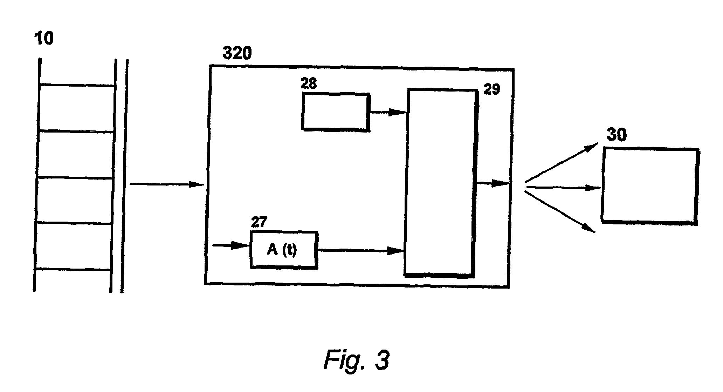

Eine weitere bevorzugte Ausführungsform der Erfindung ist in Fig. 3 dargestellt, dabei wird die Videosequenz 10 mit den Elementen 11, 12 und 15 in der Erstellungseinrichtung 320 formatspezifisch mit aktivierbaren Objekten für eine Wiedergabeplattform 30 versehen.

Wie für Figur 2 bereits beschrieben, können Aktivierungseigenschaften der Elemente 11, 12 und 15 bei der Bearbeitung einer ähnlichen Videosequenz mit den gleichen Elementen als allgemeine Vorgaben in eine Vorgabeneinheit 28 abgelegt werden. Sind also für die Elemente 11, 12 und 15 der Videosequenz bereits Aktivierungseigenschaften in der Vorgabeneinheit 28 enthalten, so kann nach Erfassung der Aktivierbarkeit in einer Aktivierbarkeitseinheit 27 die Erstellung des aktivierbaren Objekts für das Element 11, 12 oder 15 in der Einbindungseinheit 29 erfolgen.

Die vorhandenen Aktivierungseigenschaften und die zeitliche Aktivierbarkeit für die Videosequenz sind in einer externen Datenbank (nicht dargestellt) gespeichert. Die externe Datenbank kann beispielsweise ein Teil der Aktivierbarkeitseinheit 27 sein, oder für die Videosequenz eine Kopie der Auswahl für die Videosequenz in der Aktivierbarkeitseinheit 27 zur Verfügung stellen. Die Vorgaben sind beispielsweise in einer weiteren externen Datenbank (nicht dargestellt) gespeichert. Diese weitere Datenbank kann Teil der Vorgabeneinheit 28 sein oder eine Kopie der formatspezifischen Auswahl der Vorgaben zusammen mit den allgemeinen Vorgaben in der Vorgabeneinheit 28 bereit stellen.

Zur Erstellung der formatspezifischen Videosequenz anhand der formatspezifischen und allgemeinen Vorgaben, eventuell vorhandener Gewichtungen und der Aktivierungseigenschaften des Elements 11, 12 oder 15, kann die Einbindungseinheit 29 als Exportfilter realisiert sein, der auf eine Anfrage für eine Videosequenz 10 mit aktivierbaren Objekten für eine Wiedergabeplattform 30 mit einem spezifischen Format, durch das formatspezifische Erstellen automatisch reagiert.

Ist als formatspezifische Vorgabe für die Wiedergabeplattform 30 eine Verwendung von Schaltflächen als Repräsentant von Elementen, aber in den allgemeinen Vorgaben des Elements 11 die Anzeige eines selektierbaren Texts als Repräsentant des Elements vorgesehen, so kann die Einbindungseinheit 29 anhand von Gewichtungen für die in diesem Beispiel widersprüchlichen Vorgaben auswählen, welche Repräsentation verwendet wird. Gewichtungen können für die Aktivierungseigenschaften und die Vorgaben vorhanden sein.

## Patentansprüche

1. Verfahren zur rechnergestützten Erstellung eines aktivierbaren Objekts für ein auditives oder visuelles Element (11,12,15) einer Videosequenz (10), wobei das Verfahren verschiedene Wiedergabeplattformen mit jeweils einem plattformspezifischen Format für Videosequenzen mit aktivierbaren Objekten unterstützt, umfassend die Schritte:
Erfassen oder Speichern einer zeitlichen Aktivierbarkeit für das aktivierbare Objekt (31, (12+22)) der Videosequenz;
Erstellen des aktivierbaren Objekts (31, (12+22)) unter Berücksichtigung der zeitlichen Aktivierbarkeit und von Aktivierungseigenschaften für das aktivierbare Objekt (31, (12+22));
**dadurch gekennzeichnet, dass:**
der Schritt des Erstellens unter Berücksichtigung vorbestimmter Vorgaben für Aktivierungseigenschaften von aktivierbaren Objekten erfolgt, die in einer Datenbank gespeichert sind, wobei ein räumliches Anordnen des aktivierbaren Objekts (31, (12+22)) unter Berücksichtigung der vorbestimmten Vorgaben erfolgt;
die vorbestimmten Vorgaben plattform-formatspezifische Vorgaben (28b) enthalten; und
der Schritt des Erstellens für eine Wiedergabeplattform (30) angepasst an ein plattformspezifisches Format der Wiedergabeplattform (30) erfolgt.

2. Verfahren nach Anspruch 1 **dadurch gekennzeichnet, dass**
für das Erstellen vorgegeben wird einen selektierbaren Text oder eine aktivierbare Fläche (21, 22) als Repräsentant des Elements (11, 12, 15), räumlich unabhängig von dem Element (11, 12, 15) angeordnet, zu verwenden.

3. Verfahren nach Anspruch 1 oder 2 **dadurch gekennzeichnet, dass**
die zeitliche Aktivierbarkeit für das Element (11,12,15) getrennt von der Videosequenz (10) gespeichert wird.

4. Verfahren nach einem der Ansprüche 1 bis 3 **dadurch gekennzeichnet, dass**
Aktivierungseigenschaften für das Element (11, 12, 15) getrennt von der Videosequenz (10) gespeichert werden.

5. Verfahren nach einem der Ansprüche 1 bis 4 **dadurch gekennzeichnet, dass**
die Aktivierungseigenschaften und die zeitliche Aktivierbarkeit für das Element (11,12,15) in einer zweiten Datenbank und getrennt voneinander gespeichert werden, aber durch Verweise einander zugeordnet werden.

6. Verfahren nach einem der Ansprüche 1 bis 5 **dadurch gekennzeichnet, dass** die vorbestimmten Vorgaben für Aktivierungseigenschaften von Elementen allgemeine Vorgaben (28a) enthalten, die Aktivierungseigenschaften für das Element (11,12,15) speichern können, um diese Aktivierungseigenschaften für das Element (11,12,15) in einer Vielzahl von Videosequenzen verwenden zu können.

7. Verfahren nach Anspruch 6 **dadurch gekennzeichnet, dass**
das Erfassen der zeitlichen Aktivierbarkeit durch das Setzen von Zeitmarken in Antwort auf eine Aktion (80) eines Bearbeiters bei einer Wiedergabe der Videosequenz (10) erfolgt.

8. Verfahren nach einem der Ansprüche 1 bis 7 **dadurch gekennzeichnet, dass**
der Schritt des Erstellens in Antwort auf eine Anfrage für eine plattformspezifische Videosequenz erfolgt.

9. Verfahren nach einem der Ansprüche 1 bis 8 **dadurch gekennzeichnet, dass**
die Vorgaben und die Aktivierungseigenschaften für das Element (11,12,15) Gewichtungen aufweisen, und
in dem Schritt des Erstellens für die Videosequenz (10) die vorhandenen Gewichtungen ausgewertet werden.

10. Rechnergesteuerte Vorrichtung enthaltend Mittel, die ein Verfahren nach einem der Ansprüche 1 bis 8 realisieren.

11. Speichermedium enthaltend ein Computerprogramm oder eine Befehlssequenz, das ein Verfahren nach einem der Ansprüche 1 bis 8 realisiert.

## Claims

1. Method for computer-controlled creation of an activatable object for an audio or visual element (11, 12, 15) of a video sequence (10), wherein the method supports different reproduction platforms each having a platform specific format for video sequences with activatable objects, the method comprising the steps:
recording or storing an activitability in time for the activatable object (31, (12 + 22) of the video sequence;
creating the activatable object (31, (12 + 22) in consideration of the activatability in time and activation properties for the activatable object (31, (12 + 22);
**characterised in that:**
the step of creating is performed in consideration of predetermined pre-set parameters for activation properties, which are stored in a database, wherein a positional arrangement of the activatable object (31, (12 + 22) is performed in consideration of the predetermined pre-set parameters;
the predetermined pre-set parameters comprise platform specific pre-set parameters (28); and
the step of creating is performed for a reproduction platform (30) adapted to a platform specific format of the reproduction platform (30).

2. The method according to Claim 1 **characterised in that** for the creating it is predetermined to use a selectable text or an activatable area (21, 22) as a representative of the element (11, 12, 15) being positionally arranged independent from the element.

3. The method according to Claim 1 or 2 **characterised in that** the activatability in time for the element (11, 12, 15) is stored separated from the video sequence (10).

4. The method according to one of claims 1 to 3 **characterised in that** activation properties for the element (11,12,15) are stored separated from the video sequence (10).

5. The method according to one of claims 1 to 4 **characterised in that** the activation properties and the activatability in time for the element (11, 12, 15) are stored in a second database and separated from each other, but associated to each other by references.

6. The method according to one of claims 1 to 5 **characterised in that** the predetermined pre-set parameters for activation properties of elements comprise general parameters (28a), which may store activation properties for the element (11,12,15) in order to be able to use these activation properties for the element (11, 12, 15) in a plurality of video sequences.

7. The method according to claim 6 **characterised in that** the recording of the activatability in time is performed by setting time stamps in response to an action (80) of a processing person upon reproduction of the video sequence (10).

8. The method according to one of claims 1 to 7 **characterised in that** the step of creating is performed in response to a request for a platform specific video sequence.

9. The method according to one of claims 1 to 8 **characterised in that** the pre-set parameters and the activation properties for the element (11, 12, 15) comprise importancy factors; and in the step of creating, the existing importancy factors are evaluated for the video sequence (10).

10. Computer controlled apparatus comprising means to realise a method according to one of claims 1 to 8.

11. Storage medium comprising computer program or instruction sequence realising the method according to one of claims 1 to 8.

## Revendications

1. Méthode de création assistée par ordinateur d'un objet activable pour un élément auditif ou visuel (11, 12, 15) d'une séquence vidéo (10), dans lequel la méthode assiste différentes plates-formes de reproduction ayant chacune un format spécifique de plate-forme pour des séquences vidéo avec des objets activables, comportant les étapes consistant à :
saisir ou stocker une aptitude à l'activation temporaire pour l'objet activable (31, (12+22)) de la séquence vidéo;
créer l'objet activable (31, (12+22)) en prenant en considération l'aptitude à l'activation temporaire et les caractéristiques d'activation pour l'objet activable (31, (12+22));
**caractérisée en ce que**
l'étape de la création a lieu en prenant en considération des données prédéterminées pour des caractéristiques d'activation d'objets activables, qui sont stockés dans une banque de données, un rangement spatial de l'objet activable (31, (12+22)) ayant lieu en prenant en considération les données prédéterminées;
les données prédéterminées contiennent des données (28b) spécifiques du format de la plate-forme; et
l'étape de création pour une plate-forme de reproduction (30) a lieu en s'adaptant à un format spécifique de plate-forme de la plate-forme de reproduction (30).

2. Méthode selon la revendication 1,. **caractérisée en ce que**
pour la création, on donne d'avance à utiliser un texte sélectionnable ou une surface activable (21, 22) comme représentant de l'élément (11, 12, 15), disposé spatialement de manière indépendante de l'élément (11, 12, 15).

3. Méthode selon la revendication 1 ou 2, **caractérisée en ce que**
l'aptitude à l'activation temporaire pour l'élément (11, 12, 15) est stockée séparément de la séquence vidéo (10).

4. Méthode selon l'une des revendication 1 à 3, **caractérisée en ce que**
des caractéristiques d'activation pour l'élément (11, 12, 15) sont stockées séparément de la séquence vidéo (10).

5. Méthode selon l'une des revendication 1 à 4, **caractérisée en ce que**
les caractéristiques d'activation et l'aptitude à l'activation temporaire pour l'élément (11, 12, 15) sont stockées dans une seconde banque de données et séparément les unes des autres, mais sont conjuguées par chaînage.

6. Méthode selon l'une des revendications 1 à 5, **caractérisée en ce que**
les données prédéterminées pour des caractéristiques d'activation d'éléments contiennent des données générales (28a), qui peuvent stocker des caractéristiques d'activation pour l'élément (11, 12, 15), pour pouvoir utiliser ces caractéristiques d'activation pour l'élément (11, 12, 15) dans une multiplicité de séquences vidéo.

7. Méthode selon la revendication 6, **caractérisée en ce que**
la saisie de l'aptitude à l'activation temporaire se fait par la mise en place de marques de temps en réponse à une action (80) d'un opérateur lors d'une reproduction de la séquence vidéo (10).

8. Méthode selon l'une des revendications 1 à 7, **caractérisée en ce que**
l'étape de la création a lieu en réponse à une demande pour une séquence vidéo spécifique de la plate-forme.

9. Méthode selon l'une des revendications 1 à 8, **caractérisée en ce que**
les données et les caractéristiques d'activation pour l'élément (11, 12, 15) comportent des pondérations, et
dans l'étape de la création pour la séquence vidéo (10), les pondérations existantes sont exploitées.

10. Appareil commandé par ordinateur contenant des moyens qui réalisent une méthode selon l'une des revendications 1 à 8.

11. Support d'enregistrement contenant un programme d'ordinateur ou une séquence d'ordres qui réalise une méthode selon l'une des revendications 1 à 8.
